# EUROPEAN PATENT APPLICATION

(11) **EP 2 090 964 A2**
(43) Date of publication of application: **19.08.2009**
(21) Application number: 09000299.9
(22) Date of filing: 12.01.2009
(51) Int. Cl.: G06F 3/033

(54) **Pointing device**

(30) Priority: 14.02.2008 JP 2008032569
(71) Applicant: BlueMouse Technology Co., Ltd., Hirosaki-shi Aomori (JP)
(72) Inventor: Miura, Takeshi, Hirosaki-shi Aomori-ken (JP)
(74) Representative: Grünecker, Kinkeldey, Stockmair & Schwanhäusser Anwaltssozietät

(57) **Abstract**

A pointing device comprises an omnidirectional pressure sensor positioned on a portion of instrument, and a click switch positioned on another portion of the instrument different from the position of said omnidirectional pressure sensor. The omnidirectional pressure sensor is positioned in front of the instrument and the click switch is positioned on the rear portion or the upper portion of the instrument.The omnidirectional pressure sensor moves the cursor on the screen of the instrument and the click switch functions as decision switch for deciding the position of movement of the cursor.

## Description

### SPECIFICATION

### Technical Field

This invention relates to a pointing device such as mouse pad for inputting to a cell phone, a portable device or a computer.

### Background of Invention

In a conventional cell phone or mobile phone, or a conventional portable device, a switch referred to as a four-direction key or eight-direction key for determining on/off binary is used. An item displayed on image plane of the device is selected using this switch. When the item is selected the item is determined or decided by a click switch.

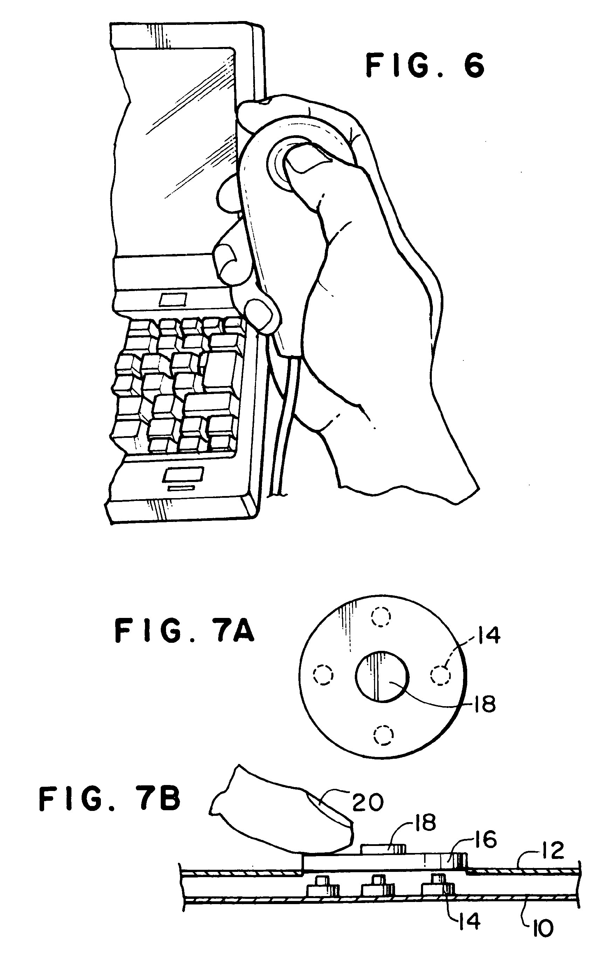

Fig. 7 is a view showing a conventional pointing device provided with a four-direction key or switch and a decision click switch positioned at the center of the key, and particularly, Fig. 7A is its plane view and Fig. 7B is its side view. In Fig. 7 four binary switches 14 are respectively positioned on a substrate 10 at an angle of 90 degrees, and the surface 12 of device are positioned above the four binary switches 14. A key top 16 for operating the binary switches 14 by a finger 20 is positioned opposite to the binary switches 14, and a click switch 18 is positioned at the center of the key top 18.

Of recent years the performance of the cell phone or portable device has be dramatically increased, the contents of liquid crystal display have been highly developed, and particularly graphics, games, and 3D images have been able to be displayed. Under the present situation the input device is in the process of change from one using four direction switch to the other in which 360-degrees omnidirectional movement is put out by the pressure of finger. Such a pointing device can change movement speed by the pressure of finger and also can change moving distance.

To embody such a pointing device, electric capacitance pressure sensor or magnetometric sensor is used. In either type of sensor, an operator can control the contents of image on contact with the sensor by his finger so that smooth movement is obtained in response to the movement of finger.

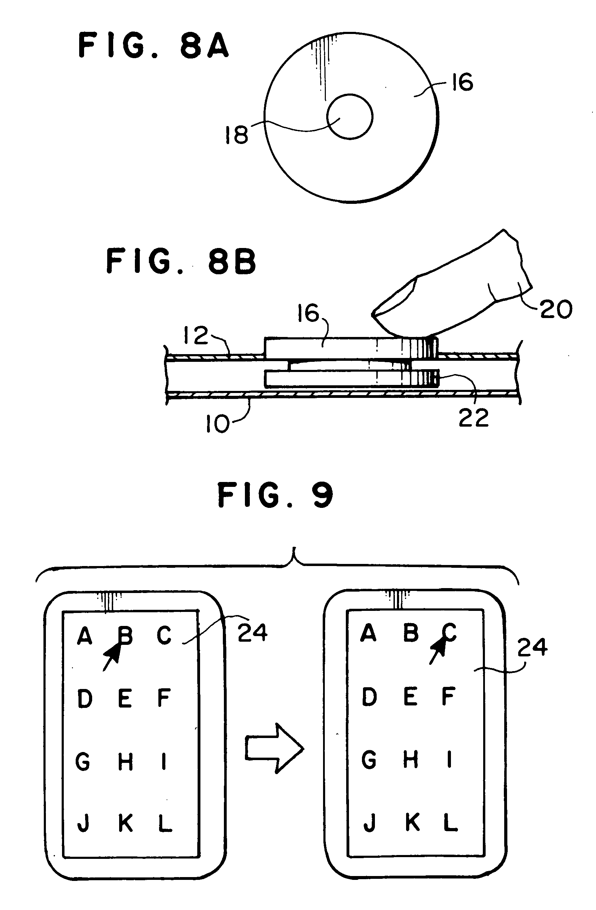

Fig. 8 is a view showing a pointing device using a conventional omnidirectional pressure sensor, and particularly Fig. 8A is its plane view and Fig. 8B is its side view. In Fig. 8, an omnidirectional pressure sensor 22 is positioned between a substrate 10 and the surface 12 of device, and a click switch or decision switch 18 is positioned at the center of the key top 16 of the pressure sensor 22.

When the pointing device provided with such an omnidirectional pressure sensor is used, an operator controls to pinpoint or specify a particular location or a particular character on the image, and then should push the click switch 18 for decision.

When it comes to control an input device over 360 degrees freely by finger, an operator happens to get into touch with the key top slightly on pushing down the decision switch if the click switch is positioned at the center of key top as usual. As a result, the cases that the item different from a selected icon or character is decided occur frequently.

Fig. 9 is a view for explanation on malfunction when a conventional pointing device is used. In Fig. 9, it is assumed that "B" on the image 24 is selected by operation of the key top. When the decision switch is touched for decision, if the key top is touched at the same time and then the pressure is applied to the key top, the decision of "C" would occur.

Therefore, it is an object of the present invention to provide a pointing device which can prevent malfunction which may occur in a conventional pointing device.

Meanwhile considering that a conventional mouse or pointing device for computer input, the mouse needs a planar surface such as a table. Under a situation that a laptop personal computer is used, there is a case in that such a planar surface is not present nearby. In view of operationality of mouse, since a cursor is moved in accordance with the movement of mouse on the surface, it is inconvenient to control movement of long distance or speed of movement.

It is the other object of the present invention to provide a pointing device which requires no planar surface and has a good operationality of input device of for computer.

### Summary of Invention

To accomplish the object, there is provided a pointing device comprises an omnidirectional pressure sensor positioned on a portion of instrument, and a click switch positioned on another portion of the instrument different from the position of said omnidirectional pressure sensor. It is preferable that the omnidirectional pressure sensor is positioned in front of the instrument and the click switch is positioned on the rear portion or the upper portion of the instrument. It is also preferable that the omnidirectional pressure sensor moves the cursor on the screen of the instrument and the click switch functions as decision switch for deciding the position of movement of the cursor.

Other objects, features, and advantages of the present invention will be explained in the following detailed description of the invention having reference to the appended drawings:

### Brief Description of Drawings

Fig. 1 is a view for explanation on an electric capacitance pressure sensor, and particularly Fig. 1A is its cross sectional view, Fig. 1B is a plan view showing a projecting portion of electrically conductive silicon rubber within the sensor, and Fig. 1C is a plan view showing the shape and position of copper plate within the sensor,
Fig. 2 is a diagrammatic view showing one embodiment of pointing device in accordance with the present invention, and particularly Fig. 2A is a perspective view from the front side, Fig. 2B is its side view and Fig. 2C is its rear view,
Fig. 3 is a diagrammatic view showing another embodiment of pointing device in accordance with the present invention, and particularly Fig. 3A is a perspective view from the front side, Fig. 3B is its side view and Fig. 3C is its rear view,
Fig. 4 is a graph showing relation between cursor speed and pressure of sensor,
Fig. 5 is a photograph showing the pointing device in accordance with the present invention from the front and from the side,
Fig. 6 is a photograph showing the pointing device in accordance with the present invention used in place of a mouse for computer,
Fig. 7 is a view showing a conventional pointing device provided with a four-direction key or switch and a decision click switch positioned at the center of the key, and particularly, Fig. 7A is its plane view and Fig. 7B is its side view,
Fig. 8 is a view showing a pointing device using a conventional omnidirectional pressure sensor, and particularly Fig. 8A is its plane view and Fig. 8B is its side view, and
Fig. 9 is a view for explanation on malfunction when a conventional pointing device is used.

### Detailed Description of the Invention

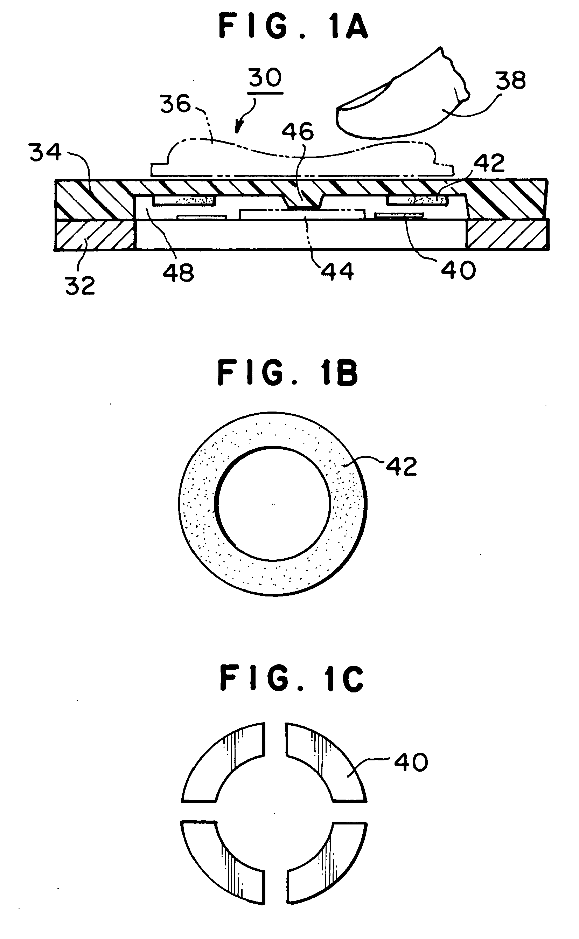

To begin with, an electric capacitance pressure sensor will be explained as an example of a 360-degrees omnidirectional pressure sensor, herein after referred to as a sensor. Fig. 1 is a view for explanation on an electric capacitance pressure sensor, and particularly Fig. 1A is its cross sectional view, Fig. 1B is a plan view showing a projecting portion of electrically conductive silicon rubber within the sensor, and Fig. 1C is a plan view showing the shape and position of copper plate within the sensor. In Fig. 1, the sensor 30 includes a substrate 32, and a silicon rubber 34 mounted on the substrate 32 and provided with a concave portion or cavity 48 including an air layer. Within the cavity 48, circular-arc copper plates 40 as shown in Fig. 1C are mounted on the substrate 32, and the projecting portion 42 of electrically conductive silicon rubber 34 is of a doughnut ring type as shown in Fig. 1B and is opposed to the copper plates 40. Furthermore, within the cavity 48, a support 44 is mounted on the substrate 32 at its center which supports the centrally projecting portion 46 of electrically conductive silicon rubber 34. A key top 36 is mounted on the upper surface of silicon rubber 34.

Now, when one point of periphery of key top is pushed by a finger, the thickness of air layer at that point is reduced, and as a result the electric capacitance between the copper plates 40 mounted on substrate 32 and the projecting portion 42 of conductive silicon rubber 34 changes. The orientation thus pushed is detected by the change. That is, the sensor 30 can detect the pressure in 360 degrees omnidirection.

When such a sensor is used as an input device for cell phone, if the click bottom or decision switch is, as mentioned above, positioned at the center of or near sensor, and on clicking the finger 38 touches the key top 36 slightly, a cursor or image on the screen would be moved.

The pointing device according to the present invention prevents interference between the finger and the click switch for decision in the case that the input device changes from four direction switch to the device in which 360 degrees direction can be detected.

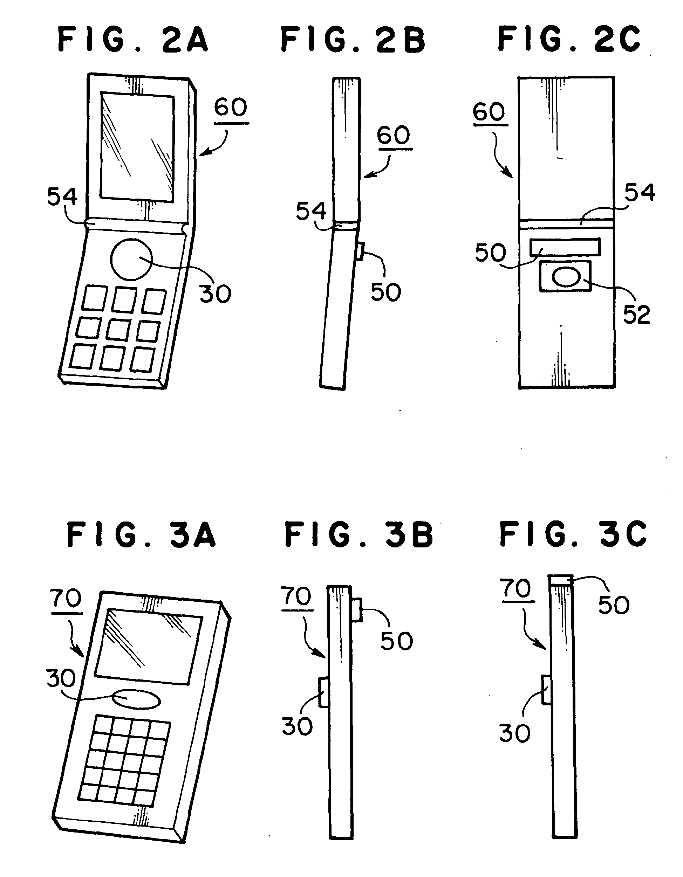

Now, the pointing device in accordance with the present invention using above-mentioned omnidirectional pressure sensor will be explained. Fig. 2 is a diagrammatic view showing one embodiment of pointing device in accordance with the present invention, and particularly Fig. 2A is a perspective view from the front side, Fig. 2B is its side view and Fig. 2C is its rear view. In Fig.2, an instrument 60 includes an upper portion and a lower portion which are connected by a hinge 54. The instrument 60 is provided with the above-mentioned sensor 30 on the front side of the lower portion and provided with a click switch 50 at the rear side. By the construction, the control of screen and decision operation without interference can be achieved in air by two fingers of a single hand

For the cell phone or mobile instrument, the screen is controlled by thumb and the fluctuation of screen selection position on pushing down the click switch can be prevented if the decision switch is positioned as shown in Fig. 2.

Fig. 3 is a diagrammatic view showing another embodiment of pointing device in accordance with the present invention, and particularly Fig. 3A is a perspective view from the front side, Fig. 3B is its side view and Fig. 3C is its rear view. In Fig. 3, the pointing device 70 without hinge is shown. As shown in Fig. 3A, the instrument 70 is provided with the above-mentioned sensor 30 in the front side of its lower portion, and as shown in Fig. 3B, the instrument is provided with the click switch 50 at its rear side, or as shown in Fig. 3C, the instrument may be provided with the click switch 50 at its upper portion.

Furthermore, conventionally the mouse for computer input is slid on the surface of the table. On the other hand, the mouse in accordance with the present invention is particularly convenient for presentation in business since the position on the large screen is indicated while the mouse is held by hand.

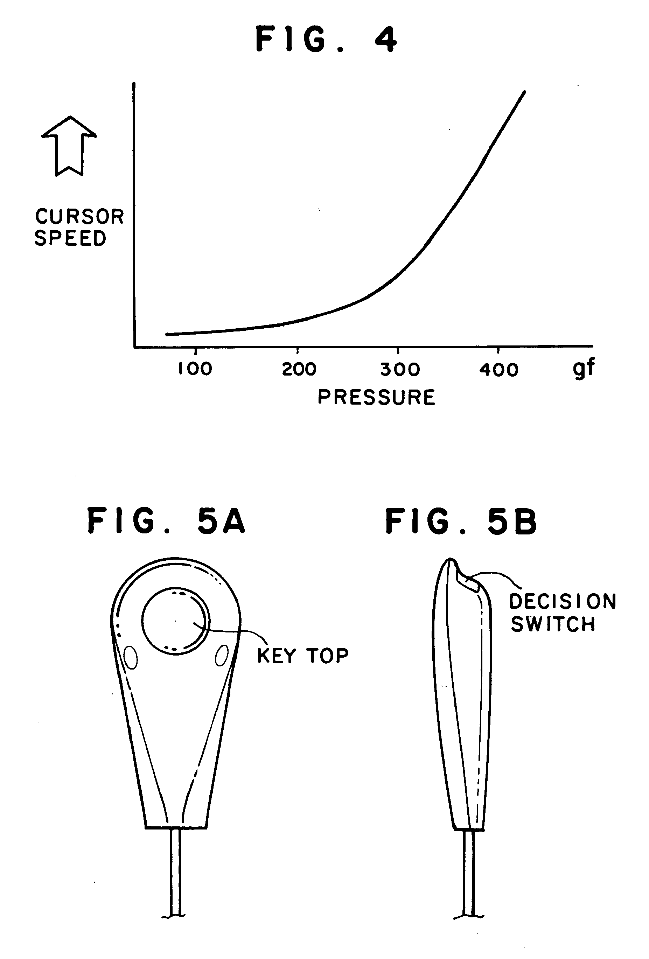

Furthermore, the sensor is of the type that the speed of movement changes with the pushed pressure. For example, in case that it is used in place of mouse for computer input, as shown in Fig. 4 showing relation between cursor speed and pressure of sensor, as more pressure is applied, the cursor on the screen can be moved more fast. With less pressure, the speed of cursor relative to pressure becomes slow in order to control the cursor delicately.

Fig. 5 is a photograph showing the pointing device in accordance with the present invention from the front and from the side. Fig. 6 is a photograph showing the pointing device in accordance with the present invention used in place of a mouse for computer. These photographs show an embodied product to test its operationality. The pointing device in accordance with the present invention is connected to a personal computer by USB and has the same functions as those of the mouse. The pointing device is picked up by a single hand while the key top is touched by thumb, and first finger is placed on the decision switch provided on the upper portion at the rear side.

Now, a portion of key top is pushed down to move a cursor in a desired direction until the cursor reaches a desired point, and then the decision switch which corresponds to the left click bottom of the mouse is clicked to decide that point smoothly. In case that the cursor is moved for a long distance, the cursor can reach the destination point at a high speed by pushing down the key top strongly, and for example, "Word document" can be decided by the decision switch. Thereafter, in order to drag the word document thus decided, the key top is operated to move the word document to the destination position while the decision switch remains down. To summarize, different operations on the screen can be achieved between the case in that the click switch is first pushed down and then omnidirectional pressure sensor is operated and the case in that omnidirectional pressure sensor is first operated and then the click switch is pushed down.

It is understood that many modifications and variations may be devised given the above description of the principles of the invention. It is intended that all such modifications and variations be considered as within the spirit and scope of this invention, as it is defined in the following claims.

## Claims

1. A pointing device which comprises
an omnidirectional pressure sensor positioned on a portion of instrument, and
a click switch positioned on another portion of said instrument different from the position of said omnidirectional pressure sensor

2. A pointing device according to claim 1 in which said omnidirectional pressure sensor is positioned in front of the instrument and said click switch is positioned on the rear portion or the upper portion of the instrument.

3. A pointing device according to claim 1 in which said omnidirectional pressure sensor moves the cursor on the screen of the instrument and said click switch functions as decision switch for deciding the position of movement of said cursor.

4. A pointing device according to claim 1 in which different operations on the screen can be achieved between the case in that the click switch is first pushed down and then omnidirectional pressure sensor is operated and the case in that omnidirectional pressure sensor is first operated and then the click switch is pushed down.

5. A pointing device according to claim 1 in which said omnidirectional pressure sensor is used to move the cursor on the screen, and the speed of movement of said cursor changes in response to the pressure applied to said omnidirectional pressure sensor.
